# EUROPEAN PATENT APPLICATION

(11) **EP 4 730 869 A1**
(43) Date of publication of application: **22.04.2026**
(21) Application number: 24822774.6
(22) Date of filing: 14.06.2024
(51) Int. Cl.: H04W 36/30

(54) **METHOD USED FOR WIRELESS COMMUNICATIONS, AND APPARATUS**

(30) Priority: 15.06.2023 CN 202310713856
(71) Applicant: Apogee Networks, LLC, Plano, TX 75024 (US)
(72) Inventor: ZHANG, Jinfang, Shanghai 201206 (CN); ZHANG, Xiaobo, Shanghai 201206 (CN)
(74) Representative: Gunzelmann, Rainer
(86) International application number: PCT/CN2024/099146
(87) International publication number: WO 2024/255826

(57) **Abstract**

Disclosed in the present application are a method used for wireless communications, and an apparatus. A first node receives a first RRC signaling, the first RRC signaling indicating a DRX active time, and the DRX active time being applied to at least a second cell; receives a first signaling on a first cell, the first signaling instructing switching to the second cell; and monitors the PDCCH within the DRX active time on the second cell, wherein the DRX active time depends on the first signaling, and the first signaling is a low-layer signaling. The present application can effectively reduce cell switching delays.

## Description

### Technical Field

The present application relates to a method and apparatus in a wireless communication system, and in particular to a method and apparatus for supporting Discontinuous Reception (DRX) in wireless communications.

### Background Art

DRX is a commonly used method in wireless communications, which can reduce power consumption of a communication terminal and increase standby time. A base station controls a timer related to DRX through Downlink Control Information (DCI) or a Medium Access Control (MAC) Control Element (CE), thereby controlling whether the terminal is in active time in a given slot or subframe, and further controlling radio reception at the communication terminal, including that when the terminal is in active time, the terminal monitors and receives a radio signal; and when the terminal is in inactive time, the terminal stops monitoring the radio signal.

When User Equipment (UE) moves from a coverage area of one cell to a coverage area of another cell, it is necessary to change a serving cell of the UE. In the prior art, a serving cell change is usually triggered by Layer 3 (L3) measurement and is implemented through Reconfiguration with Synchronization triggered by Radio Resource Control (RRC) signaling. The L3-implemented serving cell change is characterized by long delay, large signaling overhead and long interruption time. To overcome the above shortcomings, it was decided at the 3rd Generation Partner Project (3GPP) Radio Access Network (RAN) #94e plenary meeting to initiate Work Item (WI) standardization work on the Layer 1/Layer 2 (L1/L2)-based mobility enhancement technology, and a design objective of the L1/L2-based mobility enhancement technology is to achieve a fast switch of the UE serving cell.

### Summary of the Invention

Through researches, the inventors have found that in L1/L2-based mobility enhancement scenarios, how to support DRX needs to be studied. In view of the above problem, the present application discloses a solution. In the absence of conflicts, embodiments and features in the embodiments in a first node of the present application can be applied to a second node, and vice versa. In the absence of conflicts, embodiments and features in the embodiments of the present application can be arbitrarily combined with each other. Further, although the original intention of the present application is directed to a Uu air interface, the present application can also be used for a PC5 interface. Further, although the original intention of the present application is directed to enhanced mobility as a typical scenario or example, the present application is also applicable to other scenarios facing similar problems, such as other scenarios requiring mobility support, including but not limited to multi-antenna systems, multi-TRP (Transmission Reception Point) systems, capacity enhancement systems, near field communication systems, unlicensed frequency domain communication, Internet of Things (IoT), Ultra Reliable Low Latency Communication (URLLC) networks, Internet of Vehicles (IoV) communication, relay communication, dual-connectivity (DC), multi-connectivity (MC) and the like, and similar technical effects can also be achieved. In addition, the use of a unified solution for different scenarios (including but not limited to cellular communication scenarios between terminals and base stations) also helps to reduce hardware complexity and costs. In particular, for explanations of the terminology, nouns, functions, and variables in the present application (if not specified), reference can be made to definitions in TS38 series and TS37 series of the 3GPP specifications.

The present application discloses a method in a first node used for wireless communication, comprising:
receiving first RRC signaling, the first RRC signaling indicating a DRX active time, and the DRX active time being applied to at least a second cell;
receiving first signaling on a first cell, the first signaling indicating switching to the second cell;
and monitoring a PDCCH within the DRX active time on the second cell,
wherein the DRX active time depends on the first signaling; and the first signaling is lower-layer signaling.

As an embodiment, in the above method, the first RRC signaling indicating the DRX active time can effectively support UE power saving.

As an embodiment, in the above method, the first signaling being lower-layer signaling enables fast cell switch.

As an embodiment, in the above method, the DRX active time depending on the first signaling can effectively reduce cell switching delays.

As an embodiment, in the above method, the DRX active time depending on the first signaling can reduce the cell switch failure risk.

As an embodiment, in the above method, the DRX active time depending on the first signaling can increase the DRX active time to complete cell switch in a timely manner.

As an embodiment, in the above method, the DRX active time depending on the first signaling improves the flexibility of system processing.

According to one aspect of the present application, comprising:
the DRX active time depending on the first signaling comprising: the DRX active time starting when the first signaling is received.

As an embodiment, the above method can avoid entering a DRX inactive time, monitor the Physical Downlink Control Channel (PDCCH) in a timely manner, and reduce cell switching delays.

According to one aspect of the present application, comprising:
transmitting second signaling on the first cell, the second signaling indicating that the first signaling is correctly received,
wherein the DRX active time depending on the first signaling comprises: the DRX active time starting when the transmission of the second signaling is completed. As an embodiment, the above method can avoid entering a DRX inactive time, monitor the PDCCH in a timely manner, and reduce cell switching delays.

According to one aspect of the present application, comprising:
the DRX active time depending on the first signaling comprising: the DRX active time starting when a configuration of the second cell is applied, wherein the first signaling indicates that the configuration of the second cell is applied.

As an embodiment, the above method can avoid entering a DRX inactive time, monitor the PDCCH in a timely manner, and reduce cell switching delays.

According to one aspect of the present application, comprising:
transmitting second RRC signaling on the second cell, the second RRC signaling indicating that RRC reconfiguration is completed,
wherein the PDCCH is monitored, and the PDCCH indicates a time-frequency resource occupied by the second RRC signaling.

As an embodiment, in the above method, a successful network cell switch is indicated by the transmission of the second RRC signaling.

As an embodiment, in the above method, transmitting the second RRC signaling via a time-frequency resource scheduled by the PDCCH can accelerate a cell switching process, reduce cell switching delays, and reduce service interruption caused by cell switching.

According to one aspect of the present application, comprising:
the first signaling indicating a timing advance value for the second cell; and the first signaling not triggering transmission of a random access preamble on the second cell.

As an embodiment, in the above method, the first signaling indicating the timing advance value for the second cell can accelerate a cell switching process, reduce cell switching delays, and reduce service interruption caused by cell switching.

As an embodiment, in the above method, the first signaling indicating the timing advance value for the second cell can simplify a random access procedure.

As an embodiment, in the above method, the first signaling indicating the timing advance value for the second cell enables the first node to omit obtaining uplink synchronization with the second cell through a random access procedure during a switching process.

As an embodiment, in the above method, the first signaling indicating the timing advance value for the second cell can save signaling overhead.

As an embodiment, in the above method, the first signaling not triggering transmission of a random access preamble on the second cell can accelerate a cell switching process, reduce cell switching delays, and reduce service interruption caused by cell switching.

According to one aspect of the present application, comprising:
receiving third signaling prior to receiving the first signaling;
and in response to receiving the third signaling, transmitting a first random access preamble on the second cell,
wherein the first random access preamble is used for determining the timing advance value for the second cell.

As an embodiment, in the above method, triggering transmission of the first random access preamble prior to cell switching enables a network to obtain the timing advance value for uplink transmission of the first node to the second cell in advance, thereby accelerating a cell switching process.

The present application discloses a method in a second node used for wireless communication, comprising:
transmitting first RRC signaling, the first RRC signaling indicating a DRX active time, and the DRX active time being applied to at least a second cell;
and transmitting first signaling on a first cell, the first signaling indicating switching to the second cell,
wherein a PDCCH is monitored within the DRX active time on the second cell; the DRX active time depends on the first signaling; and the first signaling is lower-layer signaling.

According to one aspect of the present application, comprising:
the DRX active time depending on the first signaling comprising: the DRX active time starting when the first signaling is received.

According to one aspect of the present application, comprising:
receiving second signaling on the first cell, the second signaling indicating that the first signaling is correctly received,
wherein the DRX active time depending on the first signaling comprises: the DRX active time starting when the transmission of the second signaling is completed.

According to one aspect of the present application, comprising:
the DRX active time depending on the first signaling comprising: the DRX active time starting when a configuration of the second cell is applied,
wherein the first signaling indicates that the configuration of the second cell is applied.

According to one aspect of the present application, comprising:
the first signaling indicating a timing advance value for the second cell; and the first signaling not triggering transmission of a random access preamble on the second cell.

According to one aspect of the present application, comprising:
transmitting third signaling prior to transmitting the first signaling,
wherein the third signaling is used for triggering transmission of a first random access preamble on the second cell; and the first random access preamble is used for determining the timing advance value for the second cell.

According to one aspect of the present application, comprising:
receiving a first message, the first message indicating a timing advance value for the second cell.

As an embodiment, a transmitter of the first message and a receiver of the first random access preamble are co-located.

As an embodiment, the timing advance value for the second cell, that is indicated in the first message, is used for generating the timing advance value for the second cell that is indicated in the first signaling.

As an embodiment, in the above method, obtaining the timing advance value for the second cell through the first message and the first signaling can simplify the UE reception capability.

According to one aspect of the present application, comprising:
transmitting a second message, the second message indicating switching to the second cell.

As an embodiment, the second message is transmitted after the first signaling.

As an embodiment, a receiver of the second message and a transmitter of the PDCCH are co-located.

As an embodiment, in the above method, cell switch can be timely indicated to a base station of a target cell via the second message.

The present application discloses a method in a third node used for wireless communication, comprising:
receiving a first random access preamble on a second cell,
wherein the first random access preamble is used for determining a timing advance value for the second cell; wherein first RRC signaling is received, the first RRC signaling indicates a DRX active time, and the DRX active time is applied to at least the second cell; first signaling is received on a first cell, and the first signaling indicates switching to the second cell; a PDCCH is monitored within the DRX active time on the second cell; the DRX active time depends on the first signaling; the first signaling is lower-layer signaling; and third signaling is received before the first signaling is received, and the third signaling is used for triggering transmission of the first random access preamble.

According to one aspect of the present application, comprising:
the DRX active time depending on the first signaling comprising: the DRX active time starting when the first signaling is received.

According to one aspect of the present application, comprising:
the DRX active time depending on the first signaling comprising: the DRX active time starting when transmission of a second signaling is completed,
wherein the second signaling is received on the first cell, and the second signaling indicates that the first signaling is correctly received.

According to one aspect of the present application, comprising:
the DRX active time depending on the first signaling comprising: the DRX active time starting when a configuration of the second cell is applied,
wherein the first signaling indicates that the configuration of the second cell is applied.

According to one aspect of the present application, comprising:
transmitting the PDCCH on the second cell;
and receiving second RRC signaling on the second cell, the second RRC signaling indicating that RRC reconfiguration is completed,
wherein the PDCCH indicates a time-frequency resource occupied by the second RRC signaling.

According to one aspect of the present application, comprising:
the first signaling indicating the timing advance value for the second cell; and the first signaling not triggering transmission of a random access preamble on the second cell.

According to one aspect of the present application, comprising:
transmitting a first message, the first message indicating the timing advance value for the second cell.

According to one aspect of the present application, comprising:
receiving a second message, the second message indicating switching to the second cell.

The present application discloses a first node used for wireless communication, comprising:
a first receiver, receiving first RRC signaling, the first RRC signaling indicating a DRX active time, and the DRX active time being applied to at least a second cell; receiving first signaling on a first cell, the first signaling indicating switching to the second cell; and monitoring a PDCCH within the DRX active time on the second cell,
wherein the DRX active time depends on the first signaling; and the first signaling is lower-layer signaling.

The present application discloses a second node used for wireless communication, comprising:
a second transmitter, transmitting first RRC signaling, the first RRC signaling indicating a DRX active time, and the DRX active time being applied to at least a second cell; and transmitting first signaling on a first cell, the first signaling indicating switching to the second cell,
wherein a PDCCH is monitored within the DRX active time on the second cell; the DRX active time depends on the first signaling; and the first signaling is lower-layer signaling.

The present application discloses a third node for wireless communication, comprising:
a third receiver, receiving a first random access preamble on a second cell, wherein the first random access preamble is used for determining a timing advance value for the second cell;
wherein first RRC signaling is received, the first RRC signaling indicates a DRX active time, and the DRX active time is applied to at least the second cell; first signaling is received on a first cell, and the first signaling indicates switching to the second cell; a PDCCH is monitored within the DRX active time on the second cell; the DRX active time depends on the first signaling; the first signaling is lower-layer signaling; and third signaling is received before the first signaling is received, and the third signaling is used for triggering transmission of the first random access preamble.

### Brief Description of the Drawings

Other features, objectives and advantages of the present application will become more apparent from reading the detailed description of non-limiting embodiments made with reference to the following drawings:
FIG. 1 illustrates a flowchart of signal processing in a first node according to an embodiment of the present application;
FIG. 2 illustrates a schematic diagram of a network architecture according to an embodiment of the present application;
FIG. 3 illustrates a schematic diagram of a radio protocol architecture for a user plane and a control plane according to an embodiment of the present application;
FIG. 4 illustrates a schematic diagram of a hardware module of a communication device according to an embodiment of the present application;
FIG. 5 illustrates a flowchart of radio signal transmission according to an embodiment of the present application;
FIG. 6 illustrates a flowchart of signal transmission in a backhaul network according to an embodiment of the present application;
FIG. 7 illustrates a schematic diagram of a DRX active time according to an embodiment of the present application;
FIG. 8 illustrates a schematic diagram of a DRX active time according to an embodiment of the present application;
FIG. 9 illustrates a schematic diagram of a DRX active time according to an embodiment of the present application;
FIG. 10 illustrates a structure block diagram of a processing apparatus in a first node according to an embodiment of the present application;
FIG. 11 illustrates a structure block diagram of a processing apparatus in a second node according to an embodiment of the present application;
and FIG. 12 illustrates a structure block diagram of a processing apparatus in a third node according to an embodiment of the present application.

### Detailed Description of Embodiments

Technical solutions of the present application will be further described in detail below in conjunction with the drawings. It should be noted that, in the absence of conflicts, embodiments and features in the embodiments of the present application can be arbitrarily combined with each other.

### Embodiment 1

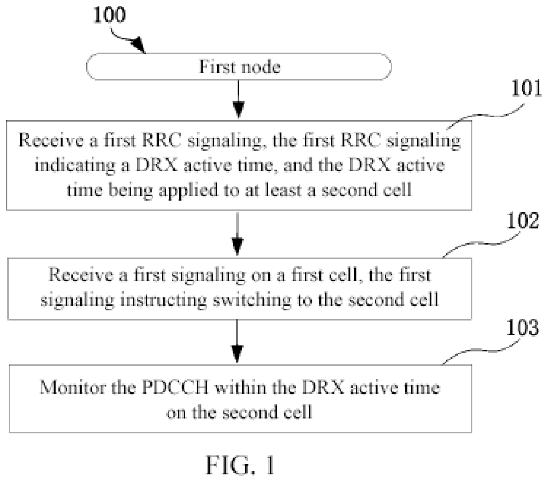

Embodiment 1 illustrates a flowchart of signal processing in a first node according to an embodiment of the present application, as shown in FIG. 1.

In Embodiment 1, a first node 100 receives first RRC signaling in step 101, the first RRC signaling indicating a DRX active time, and the DRX active time being applied to at least a second cell; receives first signaling on a first cell in step 102, the first signaling indicating switching to the second cell; and monitors a PDCCH within the DRX active time on the second cell in step 103z2, wherein the DRX active time depends on the first signaling; and the first signaling is lower-layer signaling.

As an embodiment, first RRC signaling is received.

As an embodiment, the first RRC signaling is received on a first cell.

As an embodiment, the first RRC signaling is received on a serving cell of the first node.

As an embodiment, the serving cell of the first node includes a Special Cell (SpCell).

As an embodiment, the serving cell of the first node includes a Secondary Cell (SCell).

As an embodiment, the serving cell of the first node includes the first cell.

As an embodiment, the first RRC signaling is RRCReconfiguration (RRC Reconfiguration).

As an embodiment, the first RRC signaling comprises a candidate configuration.

As an embodiment, the first RRC signaling comprises a reference configuration.

As an embodiment, the first RRC signaling comprises a candidate target configuration.

As an embodiment, the first RRC signaling comprises a candidate delta configuration.

As an embodiment, the first RRC signaling comprises a CellGroupConfig (cell group configuration) field, the CellGroupConfig field configuring at least one candidate cell.

As an embodiment, the first RRC signaling is used for configuring at least one switch candidate cell, the at least one switch candidate cell including the second cell.

As an embodiment, the first RRC signaling is used for configuring an air interface resource in the at least one switch candidate cell, the at least one switch candidate cell including the second cell.

As an embodiment, the first RRC signaling indicates the second cell.

As an embodiment, the first RRC signaling comprises an identity of the second cell.

As an embodiment, the first RRC signaling is used for configuring the second cell.

As an embodiment, the first RRC signaling is used for configuring an air interface resource of the second cell.

As an embodiment, the first RRC signaling is used for configuring a unicast Radio Network Temporary Identifier (RNTI) of the first node in the second cell.

As an embodiment, the first RRC signaling is used for configuring a Cell (C) -RNTI of the first node in the second cell.

As an embodiment, the first RRC signaling is used for configuring an air interface resource performing a random access procedure on the second cell.

As an embodiment, the first RRC signaling is used for configuring a Medium Access Control (MAC) parameter of at least the second cell.

As an embodiment, the first RRC signaling indicates a DRX active time.

As an embodiment, the first RRC signaling comprises a drx-Config (discontinuous reception configuration) field, the drx-Config field configures a DRX-related parameter, and the DRX-related parameter indicates the DRX active time.

As an embodiment, the first RRC signaling configures a DRX-on duration timer (drx-onDurationTimer), comprising configuring an expiration value of the DRX-on duration timer.

As an embodiment, the DRX active time comprises the time when the DRX-on duration timer is running.

As an embodiment, the first RRC signaling configures a DRX-inactivity timer (drx-InactivityTimer), comprising configuring an expiration value of the DRX-inactivity timer.

As an embodiment, the DRX active time comprises the time when the DRX-inactivity timer is running.

As an embodiment, the first RRC signaling configures a DRX-downlink retransmission timer (drx-RetransmissionTimerDL), comprising configuring an expiration value of the DRX-downlink retransmission timer.

As an embodiment, the DRX active time comprises the time when the DRX-downlink retransmission timer on any serving cell is running.

As an embodiment, the first RRC signaling configures a DRX-uplink retransmission timer (drx-RetransmissionTimerUL), comprising configuring an expiration value of the DRX-uplink retransmission timer.

As an embodiment, the DRX active time comprises the time when the DRX-uplink retransmission timer on any serving cell is running.

As an embodiment, the first RRC signaling configures a DRX long cycle and start offset (drx-LongCycleStartOffset).

As an embodiment, the first RRC signaling configures a DRX short cycle (drx-ShortCycle).

As an embodiment, the first RRC signaling configures a DRX short cycle timer (drx-ShortCycleTimer).

As an embodiment, the first RRC signaling configures a DRX slot offset (drx-SlotOffset).

As an embodiment, the DRX-on duration timer runs periodically according to the DRX-related parameter configured by the first RRC signaling.

As an embodiment, when a PDCCH indicating a new transmission is received, the DRX-inactivity timer is started or re-started.

As an embodiment, one timer is in a running state after being started or re-started; when the one timer is in the running state, the one timer is updated at each time interval; and after the one timer expires, updating the one timer at each time interval is stopped.

As an embodiment, when starting one timer, a value of the one timer is set to 0, and the phrase "updating the one timer" comprises: increasing the value of the one timer by 1; and when the value of the one timer is an expiration value of the one timer, the one timer expires.

As an embodiment, when starting the one timer, a value of the one timer is set to an expiration value of the one timer, and the phrase "updating the one timer" comprises: decreasing the value of the one timer by 1; and when the value of the one timer is 0, the one timer expires.

As an embodiment, the DRX active time comprises the time when a ra-ContentionResolutionTimer (random access contention resolution timer) or an msgB-ResponseWindow (message B response window) is running.

As an embodiment, the DRX active time comprises the time when a Scheduling Request (SR) is transmitted on a Physical Uplink Control Channel (PUCCH) and is pending.

As an embodiment, the DRX active time comprises the time when a PDCCH that indicates a new transmission and is identified by a C-RNTI has not yet been received after a random access response is successfully received, wherein a random access preamble for the random access response is not selected by a MAC entity from contention-based random access preambles.

As an embodiment, the DRX active time is applied to at least a second cell.

As an embodiment, the DRX active time is configured for a plurality of cells, and the second cell is one of the plurality of cells. As an embodiment, the plurality of cells form one DRX group.

As an embodiment, the DRX active time is applied to the DRX group.

As an embodiment, the DRX active time being applied to at least a second cell means that: a PDCCH is monitored on at least a second cell in the DRX active time.

As an embodiment, first signaling is received on a first cell.

As an embodiment, the first cell is a primary cell (PCell).

As an embodiment, the first cell is a Special cell (SpCell).

As an embodiment, the first cell is a source cell.

As an embodiment, receiving on a cell means: receiving through an air interface resource of a cell.

As an embodiment, transmitting on a cell means: transmitting through an air interface resource of a cell.

As an embodiment, the air interface resource comprises at least one of a time domain resource, a frequency domain resource, a spatial domain resource and a code domain resource.

As an embodiment, the first signaling is lower-layer signaling.

As an embodiment, the first signaling is signaling of a protocol layer below an RRC sublayer.

As an embodiment, the first signaling is physical layer signaling.

As an embodiment, the first signaling is DCI.

As an embodiment, the first signaling is Medium Access Control (MAC) sublayer signaling.

As an embodiment, the first signaling is a MAC Control Element (CE).

As an embodiment, the first signaling is cell switch signaling.

As an embodiment, a name of the first signaling includes L1/L2-triggered mobility (LTM, Layer 1/Layer 2-triggered mobility).

As an embodiment, a name of the first signaling includes switch.

As an embodiment, the first signaling is LTM cell switch.

As an embodiment, the first signaling indicates switching to the second cell.

As an embodiment, the first signaling is a MAC CE, the first signaling is identified by a Logical Channel ID (LCID), and the Logical Channel ID indicates cell switch.

As an embodiment, the Logical Channel ID is a positive integer between 35 and 46 (including 35 and 46).

As an embodiment, the Logical Channel ID is a positive integer between 0 and 226 (including 0 and 226).

As an embodiment, the first signaling indicates the second cell.

As an embodiment, the first signaling comprises an identity of the second cell.

As an embodiment, the first signaling comprises one cell identity, and the one cell identity is used for identifying the second cell.

As an embodiment, the one cell identity is a physical cell identity.

As an embodiment, the one cell identity is a serving cell index.

As an embodiment, the one cell identity is a candidate cell index.

As an embodiment, the one cell identity is a target cell index.

As an embodiment, an identity of the second cell, that is comprised in the first signaling, is the same as an identity of the second cell that is comprised in the first RRC signaling.

As an embodiment, the first cell and the second cell belong to the same new air interface node B (gNB)-Distributed Unit (DU).

As an embodiment, the first cell and the second cell belong to different gNB-DUs.

As an embodiment, the first cell and the second cell belong to the same gNB-Central Unit (CU).

As an embodiment, the first cell and the second cell belong to different gNB-CUs.

As an embodiment, the second cell is a serving cell of the first node.

As an embodiment, the first signaling indicates swapping between a special cell and a secondary cell of the first node, wherein prior to receiving the first signaling, the first cell is an SpCell, and the second cell is an Scell.

As an embodiment, the second cell is not a serving cell of the first node.

As an embodiment, the second cell is a candidate cell for cell switch.

As an embodiment, the second cell is a target cell for cell switch.

As an embodiment, the first signaling indicates a beam selected for the second cell.

As an embodiment, the selected beam is used for downlink reception and uplink transmission in the second cell.

As an embodiment, the first signaling indicates a Transmission Configuration Indicator (TCI) state for the second cell.

As an embodiment, a PDCCH is monitored within the DRX active time on the second cell.

As an embodiment, the meaning of monitor/monitors/monitoring/monitored encompasses searching (search).

As an embodiment, the meaning of monitor/monitors/monitoring/monitored encompasses monitoring (monitor).

As an embodiment, the phrase "monitoring a PDCCH" comprises: determining whether a PDCCH exists by energy monitoring.

As an embodiment, the phrase "monitoring a PDCCH" comprises: determining whether a PDCCH exists by coherent detection.

As an embodiment, the phrase "monitoring a PDCCH" comprises: determining whether a PDCCH exists by maximum likelihood detection.

As an embodiment, the phrase "monitoring a PDCCH" comprises: determining whether a PDCCH exists by blind decoding detection.

As an embodiment, the phrase "monitoring a PDCCH" comprises: monitoring a PDCCH in a Common Search Space (CSS).

As an embodiment, the phrase "monitoring a PDCCH" comprises: monitoring a PDCCH in a UE-specific search space (USS).

As an embodiment, the PDCCH is identified by a unicast RNTI.

As an embodiment, the unicast RNTI uniquely identifies the first node in the second cell.

As an embodiment, the PDCCH is identified by at least one of a C-RNTI, a Cancellation Indication (CI)-RNTI, a Configured Scheduling (CS)-RNTI, an Interruption (INT)-RNTI, a Slot Format Indication (SFI)-RNTI, a Semi-Persistent (SP)-Channel State Information (CSI)-RNTI, a Transmit Power Control (TPC)-Physical Uplink Control Channel (PUCCH)-RNTI, a Transmit Power Control (TPC)-Physical Uplink Shared Channel (PUSCH) -RNTI, a Transmit Power Control (TPC)-Sounding Reference Signal (SRS)-RNTI, and an Availability indication (AI)-RNTI.

As an embodiment, the PDCCH is identified by at least one of a Sidelink (SL)-RNTI, a Sidelink Configured Scheduling (SLCS)-RNTI and an SL Semi-Persistent Scheduling Vehicle-to-Everything (V)-RNTI.

As an embodiment, the DRX active time depends on the first signaling.

As an embodiment, the DRX active time is related to the first signaling.

As an embodiment, the DRX active time depends on a time domain resource occupied by the first signaling.

As an embodiment, the DRX active time depends on the type of the first signaling, and the type of the first signaling comprises a MAC CE and DCI.

As an embodiment, the DRX active time depends on the content of the first signaling.

As an embodiment, the DRX active time depends on whether the first signaling indicates a timing advance value for the second cell.

As an embodiment, when the first signaling does not indicate the timing advance value for the second cell, the DRX active time depends on a random access procedure that is triggered by the first signaling and initiated by the first node in the second cell.

As an embodiment, when the first signaling indicates the timing advance value for the second cell, the DRX active time depends on the first signaling.

As an embodiment, the DRX active time depends on a feedback time for the first signaling.

As an embodiment, the DRX active time depends on an effective time of the first signaling.

As an embodiment, a start time of the DRX active time depends on the first signaling.

As an embodiment, a start time of the DRX active time is Q symbols away from a time domain resource occupied by the first signaling.

As an embodiment, a start time of the DRX active time is Q symbols away from an end time of a time domain resource occupied by the first signaling.

As an embodiment, Q is a positive integer greater than 0.

As an embodiment, the Q is 0.

As an embodiment, the DRX active time ends when the PDCCH is monitored.

### Embodiment 2

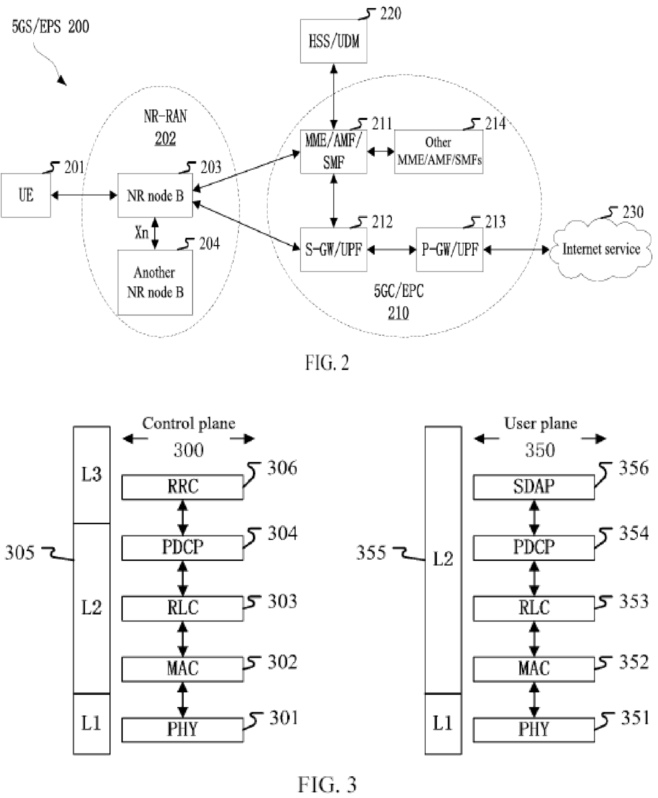

Embodiment 2 illustrates a schematic diagram of a network architecture according to an embodiment of the present application, as shown in FIG. 2. FIG. 2 illustrates a diagram of a network architecture 200 of NR 5G Long-Term Evolution (LTE) and Long-Term Evolution Advanced (LTE-A) systems. The NR 5G LTE or LTE-A network architecture 200 may be referred to as a 5G System (5GS)/Evolved Packet System (EPS) 200 or some other suitable term. The 5GS/EPS 200 may comprise one or more pieces of User Equipment (UE) 201, a Next Generation Radio Access Network (NG-RAN) 202, a 5G Core Network (5GC)/Evolved Packet Core (EPC) 210, a Home Subscriber Server (HSS)/Unified Data Management (UDM) 220, and an Internet service 230. The 5GS/EPS may be interconnected with other access networks, but these entities/interfaces are not shown for simplicity. As shown in the figure, the 5GS/EPS provides packet switching services, but those skilled in the art will readily appreciate that various concepts presented throughout the present application may be extended to networks that provide circuit switching services or other cellular networks. The NG-RAN comprises an NR node B (gNB)203 and another gNB204. The gNB203 provides user plane and control plane protocol terminations towards the UE201. The gNB203 may be connected to another gNB204 via an Xn interface (e.g., backhaul). The gNB203 may also be referred to as a base station, a base transceiver station, a radio base station, a radio transceiver, a transceiver function, a Basic Service Set (BSS), an Extended Service Set (ESS), a Transmission Reception Point (TRP), or some other suitable term, and in a Non Terrestrial Network (NTN, a non-terrestrial/ satellite network) network, the gNB203 may be a satellite, an aircraft, or a terrestrial base station relayed through a satellite. The gNB203 provides the UE201 with an access point to the 5GC/EPC210. Examples of the UE201 include a cellular phone, a smart phone, a Session Initiation Protocol (SIP) phone, a laptop, a Personal Digital Assistant (PDA), satellite radio, a global positioning system, a multimedia apparatus, a video apparatus, a digital audio player (e.g., an MP3 player), a camera, a game console, a drone, an aircraft, a narrowband Internet of Things device, a machine-type communication device, a land vehicle, an automobile, a vehicle-mounted device, a vehicle-mounted communication unit, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable term. The gNB203 is connected to the 5GC/EPC210 via an S1/NG interface. The 5GC/EPC210 comprises a Mobility Management Entity (MME)/Authentication Management Field (AMF)/Session Management Function (SMF) 211, other MME/AMF/SMFs 214, a Service Gateway (S-GW)/User Plane Function (UPF) 212, and a Packet Data Network Gateway (P-GW)/UPF213. The MME/AMF/SMF211 is a control node that processes signaling between the UE201 and the 5GC/EPC210. Generally, the MME/AMF/SMF211 provides bearer and connection management. All user Internet Protocol (IP) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically include Internet, Intranet, IP Multimedia Subsystem (IMS) and Packet Switching (PS) streaming services.

As an embodiment, the UE201 corresponds to a first node in the present application.

As an embodiment, the NR node B203 corresponds to a second node in the present application.

As an embodiment, the NR node B203 corresponds to a third node in the present application.

As an embodiment, the another NR node B204 corresponds to the third node in the present application.

As an embodiment, the UE201 is a terminal that supports LTM.

As an embodiment, the UE201 is a terminal that supports DRX.

As an embodiment, the gNB203 is a Marco Cell base station.

As an embodiment, the gNB203 is a Micro Cell base station.

As an embodiment, the gNB203 is a Pico Cell base station.

As an embodiment, the gNB203 is a Femtocell.

As an embodiment, the gNB203 is a base station device that supports large latency differences.

As an embodiment, the gNB203 is a flying platform device.

As an embodiment, the gNB203 is a satellite device.

As an embodiment, the gNB203 is a test device (for example, a transmit/receive apparatus that simulates some functions of a base station, and a signaling tester).

As an embodiment, the gNB204 is a Marco Cell base station.

As an embodiment, the gNB204 is a Micro Cell base station.

As an embodiment, the gNB204 is a Pico Cell base station.

As an embodiment, the gNB204 is a Femtocell.

As an embodiment, the gNB204 is a base station device that supports large latency differences.

As an embodiment, the gNB204 is a flying platform device.

As an embodiment, the gNB204 is a satellite device.

As an embodiment, the gNB204 is a test device (for example, a transmit/receive apparatus that simulates some functions of a base station, and a signaling tester).

As an embodiment, a radio link from the UE201 to the gNB203/the gNB204 is an uplink, and the uplink is used for performing uplink transmission.

As an embodiment, a radio link from the gNB203/the gNB204 to the UE201 is a downlink, and the downlink is used for performing downlink transmission.

As an embodiment, the UE201 is connected to the gNB203/the gNB204 respectively through Uu interfaces.

### Embodiment 3

Embodiment 3 illustrates a schematic diagram of a radio protocol architecture for a user plane and a control plane according to an embodiment of the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 for UE and gNBs using three layers: a Layer 1, a Layer 2, and a Layer 3. The Layer 1 (L1) is the lowest layer and implements various PHY (physical layer) signal processing functions. The L1 will be referred to as PHY301 herein. The Layer 2 (L2) 305 is above the PHY301 and is responsible for a link between UE and a gNB through the PHY301. The L2 305 comprises a Medium Access Control (MAC) sublayer 302, a Radio Link Control (RLC) sublayer 303, and a Packet Data Convergence Protocol (PDCP) sublayer 304, which terminate at a gNB on the network side. The PDCP sublayer 304 provides data encryption and integrity protection, and the PDCP sublayer 304 also provides inter-cell mobility support for UE between gNBs. The RLC sublayer 303 provides segmentation and reassembly of data packets and retransmits lost data packets through ARQ. The RLC sublayer 303 also provides duplicate data packet detection and protocol error detection. The MAC sublayer 302 provides mapping between a logical channel and a transport channel and multiplexing of a logical channel identity. The MAC sublayer 302 is also responsible for allocating various radio resources (e.g., resource blocks) in a cell among UEs. The MAC sublayer 302 is also responsible for Hybrid Automatic Repeat Request (HARQ) operations. A Radio Resource Control (RRC) sublayer 306 in the Layer 3 (L3) in the control plane 300 is responsible for obtaining radio resources (i.e., radio bearers) and configuring lower layers using RRC signaling between a gNB and UE. Although not illustrated, there may also be a V2X layer above the RRC sublayer 306 in the control plane 300 of the UE, and the V2X layer is responsible for generating a PC5 QoS parameter group and a QoS rule according to received service data or service requests, generating a PC5 QoS stream corresponding to the PC5 QoS parameter group, and transmitting a PC5 QoS stream identifier and the corresponding PC5 QoS parameter group to an Access Stratum (AS) for QoS processing, by the AS layer, of data packets belonging to the PC5 QoS stream identifier. The V2X layer further comprises a PC5-S signaling protocol (PC5-Signaling Protocol) sublayer, and the V2X layer is responsible for indicating to the AS layer whether each transmission is a PC5-S transmission or a V2X service data transmission. The radio protocol architecture for the user plane 350 comprises the Layer 1 (L1) and the Layer 2 (L2). The radio protocol architecture in the user plane 350 is substantially the same as the corresponding layers and sublayers in the control plane 300 for a physical layer 351, a PDCP sublayer 354 in the L2 355, an RLC sublayer 353 in the L2 355, and a MAC sublayer 352 in the L2 355, but the PDCP sublayer 354 also provides header compression for upper-layer data packets to reduce radio transmission overhead. The L2 355 in the user plane 350 further comprises a Service Data Adaptation Protocol (SDAP) sublayer 356, and the SDAP sublayer 356 is responsible for mapping between a Quality of Service (QoS) stream and a Data Radio Bearer (DRB) to support the diversity of services. The radio protocol architecture of the UE in the user plane 350 may comprise, in the L2, some or all protocol sublayers of the SDAP sublayer 356, the PDCP sublayer 354, the RLC sublayer 353, and the MAC sublayer 352. Although not illustrated, the UE may have several upper layers above the L2 355, including a network layer (e.g., an IP layer) terminating at the P-GW on the network side and an application layer terminating at the other end of connection (e.g., remote UE, a server, etc.).

As an embodiment, the radio protocol architecture in FIG. 3 is applicable to the first node in the present application.

As an embodiment, the radio protocol architecture in FIG. 3 is applicable to the second node in the present application.

As an embodiment, the radio protocol architecture in FIG. 3 is applicable to the third node in the present application.

As an embodiment, the first RRC signaling in the present application is generated in the RRC306.

As an embodiment, the first signaling in the present application is generated in the MAC302 or the MAC352.

As an embodiment, the first signaling in the present application is generated in the PHY301 or the PHY351.

As an embodiment, the second signaling in the present application is generated in the PHY301 or the PHY351.

As an embodiment, the third signaling in the present application is generated in the PHY301 or the PHY351.

As an embodiment, the second RRC signaling in the present application is generated in the RRC306.

As an embodiment, the L2 305 or 355 belongs to a higher layer.

As an embodiment, the RRC sublayer 306 in the L3 belongs to a higher layer.

### Embodiment 4

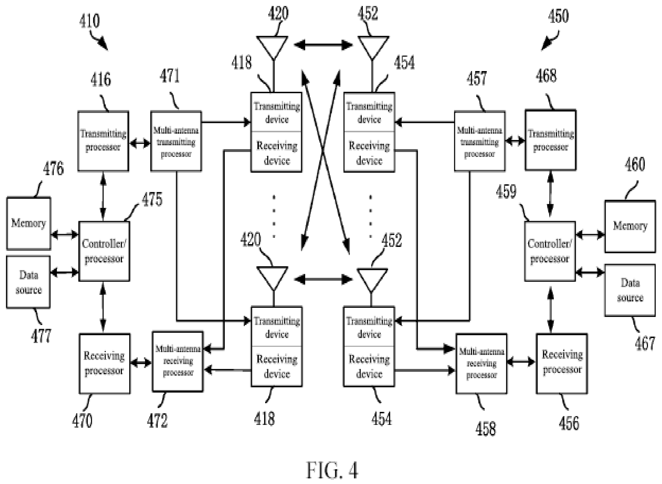

Embodiment 4 illustrates a schematic diagram of a hardware module of a communication device according to an embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a data source 477, a receiving processor 470, a transmitting processor 416, a multi-antenna receiving processor 472, a multi-antenna transmitting processor 471, a transmitting device/receiving device 418, and an antenna 420.

In the transmission from the second communication device 410 to the first communication device 450, at the second communication device 410, upper-layer data packets from a core network or upper-layer data packets from the data source 477 are provided to the controller/processor 475. The core network and the data source 477 represent all protocol layers above the L2. The controller/processor 475 implements the functionality of the L2. In the transmission from the second communication device 410 to the first communication device 450, the controller/processor 475 provides header compression, encryption, packet segmentation and reordering, multiplexing between logical and transport channels, and radio resource allocation for the first communication device 450 based on various priority metrics. The controller/processor 475 is also responsible for retransmission of lost packets, and for signaling to the first communication device 450. The transmitting processor 416 and the multi-antenna transmitting processor 471 implement various signal processing functions for the L1 (i.e., the physical layer). The transmitting processor 416 implements coding and interleaving to facilitate forward error correction (FEC) at the second communication device 410, and mapping of signal constellations based on various modulation schemes (e.g., binary phase shift keying (BPSK), quadrature phase shift keying (QPSK), M-ary phase shift keying (M-PSK), and M-ary quadrature amplitude modulation (M-QAM)). The multi-antenna transmitting processor 471 performs digital spatial precoding (including codebook-based precoding and non-codebook-based precoding) and beamforming processing on coded and modulated symbols to generate one or more spatial streams. The transmitting processor 416 then maps each spatial stream to a subcarrier, multiplexes, in a time domain and/or frequency domain, the spatial stream with a reference signal (e.g., a pilot) and then uses the Inverse Fast Fourier Transform (IFFT) to generate a physical channel carrying a time-domain multi-carrier symbol stream. The multi-antenna transmitting processor 471 then performs a transmit analog precoding/beamforming operation on the time-domain multi-carrier symbol stream. Each transmitting device 418 converts the baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier and converts the radio frequency stream into a baseband multi-carrier symbol stream for provision to the receiving processor 456. The receiving processor 456 and the multi-antenna receiving processor 458 implement various signal processing functions of the L1. The multi-antenna receiving processor 458 performs a receive analog precoding/beamforming operation on the baseband multi-carrier symbol stream from the receiving device 454. The receiving processor 456 uses the Fast Fourier Transform (FFT) to convert the baseband multi-carrier symbol stream, after the receive analog precoding/beamforming operation, from a time domain to a frequency domain. In the frequency domain, a physical layer data signal and a reference signal are demultiplexed by the receiving processor 456, wherein the reference signal will be used for channel estimation, and the data signal is subject to multi-antenna detection in the multi-antenna receiving processor 458 to recover any spatial stream destined for the first communication device 450. Symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements functions of the L2. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression and control signal processing to recover upper-layer data packets from the second communication device 410. The upper-layer data packets are then provided to all protocol layers above the L2. Various control signals may also be provided to the L3 for L3 processing.

In the transmission from the first communication device 450 to the second communication device 410, at the first communication device 450, the data source 467 is used for providing upper-layer data packets to the controller/processor 459. The data source 467 represents all protocol layers above the L2. Similar to the transmitting functions at the second communication device 410 described in the transmission from the second communication device 410 to the first communication device 450, the controller/processor 459 implements header compression, encryption, packet segmentation and reordering, and multiplexing between logical and transport channels, and implements L2 functions for the user plane and the control plane. The controller/processor 459 is also responsible for retransmission of lost packets, and signaling to the second communication device 410. The transmitting processor 468 performs modulation mapping and channel coding processing, and the multi-antenna transmitting processor 457 performs digital multi-antenna spatial precoding (including codebook-based precoding and non-codebook-based precoding) and beamforming processing. Then, the transmitting processor 468 modulates the generated spatial stream into a multi-carrier/single-carrier symbol stream, which, after an analog precoding/beamforming operation in the multi-antenna transmitting processor 457, is provided to different antennas 452 via the transmitting device 454. Each transmitting device 454 first converts the baseband symbol stream provided by the multi-antenna transmitting processor 457 into a radio frequency symbol stream and then provides the radio frequency symbol stream to the antenna 452.

In the transmission from the first communication device 450 to the second communication device 410, functions at the second communication device 410 are similar to the receiving functions at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1. The controller/processor 475 implements functions of the L2. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from the first communication device 450. The upper-layer data packets from the controller/processor 475 may be provided to the core network or all protocol layers above the L2, and various control signals may also be provided to the core network or the L3 for L3 processing.

As an embodiment, the first communication device 450 apparatus comprises: at least one processor and at least one memory, wherein the at least one memory comprises a computer program code; and the at least one memory and the computer program code are configured to be used together with the at least one processor; and the first communication device 450 apparatus at least: receives first RRC signaling, the first RRC signaling indicating a DRX active time, and the DRX active time being applied to at least a second cell; receives first signaling on a first cell, the first signaling indicating switching to the second cell; and monitors a PDCCH within the DRX active time on the second cell, wherein the DRX active time depends on the first signaling; and the first signaling is lower-layer signaling.

As an embodiment, the first communication device 450 comprises: a memory storing a computer-readable instruction program, wherein the computer-readable instruction program generates actions when executed by at least one processor, and the actions comprise: receiving first RRC signaling, the first RRC signaling indicating a DRX active time, and the DRX active time being applied to at least a second cell; receiving first signaling on a first cell, the first signaling indicating switching to the second cell; and monitoring a PDCCH within the DRX active time on the second cell, wherein the DRX active time depends on the first signaling; and the first signaling is lower-layer signaling.

As an embodiment, the second communication device 410 apparatus comprises: at least one processor and at least one memory, wherein the at least one memory comprises a computer program code; and the at least one memory and the computer program code are configured to be used together with the at least one processor. The second communication device 410 apparatus at least: transmits first RRC signaling, the first RRC signaling indicating a DRX active time, and the DRX active time being applied to at least a second cell; and transmits first signaling on a first cell, the first signaling indicating switching to the second cell, wherein a PDCCH is monitored within the DRX active time on the second cell; the DRX active time depends on the first signaling; and the first signaling is lower-layer signaling.

As an embodiment, the second communication device 410 apparatus comprises: a memory storing a computer-readable instruction program, wherein the computer-readable instruction program generates actions when executed by at least one processor, and the actions comprise: transmitting first RRC signaling, the first RRC signaling indicating a DRX active time, and the DRX active time being applied to at least a second cell; and transmitting first signaling on a first cell, the first signaling indicating switching to the second cell, wherein a PDCCH is monitored within the DRX active time on the second cell; the DRX active time depends on the first signaling; and the first signaling is lower-layer signaling.

As an embodiment, the second communication device 410 apparatus comprises: at least one processor and at least one memory, wherein the at least one memory comprises a computer program code; and the at least one memory and the computer program code are configured to be used together with the at least one processor. The second communication device 410 apparatus at least: receives a first random access preamble on a second cell, wherein the first random access preamble is used for determining a timing advance value for the second cell; wherein first RRC signaling is received, the first RRC signaling indicates a DRX active time, and the DRX active time is applied to at least the second cell; first signaling is received on a first cell, and the first signaling indicates switching to the second cell; a PDCCH is monitored within the DRX active time on the second cell; the DRX active time depends on the first signaling; the first signaling is lower-layer signaling; and third signaling is received before the first signaling is received, and the third signaling is used for triggering transmission of the first random access preamble.

As an embodiment, the second communication device 410 apparatus comprises: a memory storing a computer-readable instruction program, wherein the computer-readable instruction program generates an action when executed by at least one processor, and the action comprises: receiving a first random access preamble on a second cell, wherein the first random access preamble is used for determining a timing advance value for the second cell; wherein first RRC signaling is received, the first RRC signaling indicates a DRX active time, and the DRX active time is applied to at least the second cell; first signaling is received on a first cell, and the first signaling indicates switching to the second cell; a PDCCH is monitored within the DRX active time on the second cell; the DRX active time depends on the first signaling; the first signaling is lower-layer signaling; and third signaling is received before the first signaling is received, and the third signaling is used for triggering transmission of the first random access preamble.

As an embodiment, the first communication device 450 corresponds to the first node in the present application, and the second communication device 410 corresponds to the second node in the present application.

As an embodiment, the first communication device 450 corresponds to the first node in the present application, and the second communication device 410 corresponds to the third node in the present application.

As an embodiment, the first communication device 450 is UE.

As an embodiment, the first communication device 450 is a relay.

As an embodiment, the second communication device 410 is a base station device.

As an embodiment, the second communication device 410 is a distributed unit of a base station.

As an embodiment, at least one of the antenna 420, the transmitting device 418, the multi-antenna transmitting processor 471, the transmitting processor 416, or the controller/processor 475 is used for transmitting the first RRC signaling in the present application.

As an embodiment, at least one of the antenna 452, the receiving device 454, the multi-antenna receiving processor 458, the receiving processor 456, or the controller/processor 459 is used for receiving the first RRC signaling in the present application.

As an embodiment, at least one of the antenna 420, the transmitting device 418, the multi-antenna transmitting processor 471, the transmitting processor 416, or the controller/processor 475 is used for transmitting the first signaling in the present application.

As an embodiment, at least one of the antenna 452, the receiving device 454, the multi-antenna receiving processor 458, the receiving processor 456, or the controller/processor 459 is used for receiving the first signaling in the present application.

As an embodiment, at least one of the antenna 452, the transmitting device 454, the multi-antenna transmitting processor 457, the transmitting processor 468, or the controller/processor 459 is used for transmitting the second signaling in the present application.

As an embodiment, at least one of the antenna 420, the receiving device 418, the multi-antenna receiving processor 472, the receiving processor 470, or the controller/processor 475 is used for receiving the second signaling in the present application.

As an embodiment, at least one of the antenna 420, the transmitting device 418, the multi-antenna transmitting processor 471, the transmitting processor 416, or the controller/processor 475 is used for transmitting the third signaling in the present application.

As an embodiment, at least one of the antenna 452, the receiving device 454, the multi-antenna receiving processor 458, the receiving processor 456, or the controller/processor 459 is used for receiving the third signaling in the present application.

As an embodiment, at least one of the antenna 452, the transmitting device 454, the multi-antenna transmitting processor 457, the transmitting processor 468, or the controller/processor 459 is used for transmitting the second RRC signaling in the present application.

As an embodiment, at least one of the antenna 420, the receiving device 418, the multi-antenna receiving processor 472, the receiving processor 470, or the controller/processor 475 is used for receiving the second RRC signaling in the present application.

### Embodiment 5

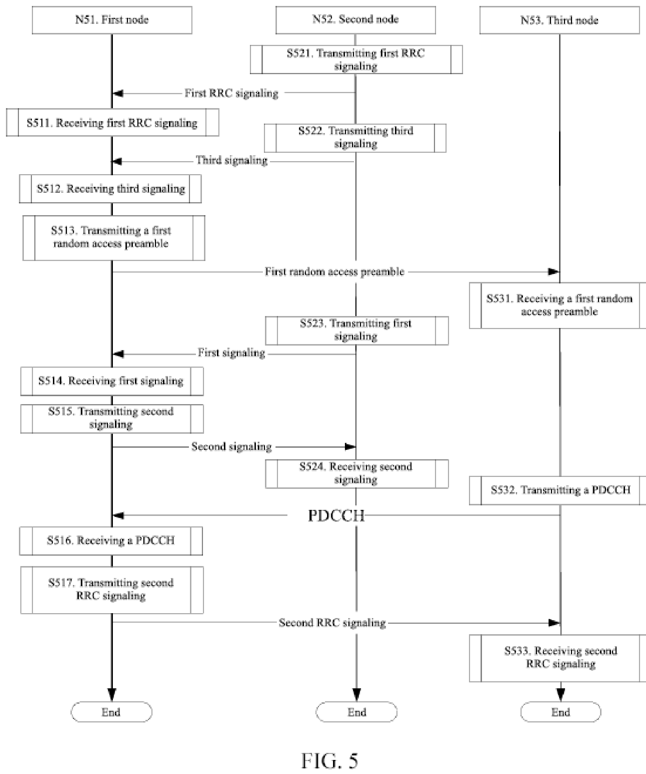

Embodiment 5 illustrates a flowchart of radio signal transmission according to an embodiment of the present application, as shown in FIG. 5. In FIG. 5, a first node N51 and a second node N52 communicate through a wireless interface, and the first node N51 and a third node N53 communicate through a wireless interface. It is particularly noted that the order in this example does not limit the signal transmission order and implementation order in the present application.

For **the first node N51,** first RRC signaling is received in step S511; third signaling is received in step S512; a first random access preamble is transmitted in step S513; first signaling is received in step S514; second signaling is transmitted in step S515; a PDCCH is received in step S516; and second RRC signaling is transmitted in step S517.

For **the second node N52,** first RRC signaling is transmitted in step S521; third signaling is transmitted in step S522; first signaling is transmitted in step S523; and second signaling is received in step S524.

For **the third node N53,** a first random access preamble is received in step S531; a PDCCH is transmitted in step S532; and second RRC signaling is received in step S533.

In Embodiment 5, first RRC signaling is received, the first RRC signaling indicating a DRX active time, and the DRX active time being applied to at least a second cell; first signaling is received on a first cell, the first signaling indicating switching to the second cell; a PDCCH is monitored within the DRX active time on the second cell, wherein the DRX active time depends on the first signaling; and the first signaling is lower-layer signaling; second signaling is transmitted on the first cell, the second signaling indicating that the first signaling is correctly received; second RRC signaling is transmitted on the second cell, the second RRC signaling indicating that RRC reconfiguration is completed, wherein the PDCCH is monitored, the PDCCH indicating a time-frequency resource occupied by the second RRC signaling; the first signaling indicates a timing advance value for the second cell; and the first signaling does not trigger transmission of a random access preamble on the second cell; third signaling is received before the first signaling is received; and in response to receiving the third signaling, a first random access preamble is transmitted on the second cell, wherein the first random access preamble is used for determining the timing advance value for the second cell.

In Embodiment 5, transmission between the first node N51 and the second node N52 is through at least a first cell; and the transmission between the first node N51 and the third node N53 is perfomed via a second cell.

As an embodiment, the second node N52 and the third node N53 are co-located.

As an embodiment, the second node N52 and the third node N53 are the same node.

As an embodiment, the second node N52 and the third node N53 are the same gNB-DU.

As an embodiment, the second node N52 and the third node N53 are the same Transmit/Receive Point (TRP).

As an embodiment, the second node N52 and the third node N53 are different nodes.

As an embodiment, the second node N52 and the third node N53 are different gNB-DUs.

As an embodiment, the second node N52 and the third node N53 are different gNB-CUs.

As an embodiment, the second node N52 is a base station of the first cell.

As an embodiment, the second node N52 is a TRP of the first cell.

As an embodiment, the third node N53 is a base station of the second cell.

As an embodiment, the third node N53 is a TRP of the second cell.

As an embodiment, the second node N52 is a base station of a serving cell of the first node N51 prior to cell switch.

As an embodiment, the third node N53 is a base station of a serving cell of the first node N51 after cell switch.

As an embodiment, prior to cell switch, the second node N52 is a serving base station of a special cell of the first node, and the third node N53 is a serving base station of a secondary cell (SCell) of the first node; and after cell switch, the second node N52 is a serving base station of a secondary cell of the first node, and the third node N53 is a serving base station of a special cell of the first node.

As an embodiment, prior to cell switch, the first cell is a special cell of the first node N51, and the second cell is a secondary cell of the first node N51; and after cell switch, the first cell is a secondary cell of the first node N51, and the second cell is a special cell of the first node N51.

As an embodiment, third signaling is received before the first signaling is received.

As an embodiment, the third signaling is received on a serving cell of the first node.

As an embodiment, the third signaling is received on the first cell.

As an embodiment, the third signaling is signaling of a protocol layer below an RRC sublayer.

As an embodiment, the third signaling is physical layer signaling.

As an embodiment, the third signaling is DCI.

As an embodiment, the third signaling is a Physical Downlink Control Channel (PDCCH) order.

As an embodiment, the third signaling is an enhanced PDCCH order.

As an embodiment, the third signaling indicates the second cell.

As an embodiment, the third signaling comprises one cell identity, and the one cell identity is used for identifying the second cell.

As an embodiment, in response to receiving the third signaling, a first random access (RA) preamble is transmitted on the second cell.

As an embodiment, the third signaling indicates the first random access preamble.

As an embodiment, the third signaling indicates an air interface resource for transmitting the first random access preamble on the second cell.

As an embodiment, the third signaling indicates a Random Access CHannel (RACH) occasion for transmitting the first random access preamble on the second cell.

As an embodiment, the third signaling indicates a Synchronization Signals (SS)/Physical Broadcast Channel (PBCH) index used for determining the RACH occasion on the second cell.

As an embodiment, the third signaling indicates an uplink carrier used for transmitting a Physical Random Access CHannel (PRACH) on the second cell, and the uplink carrier comprises a Normal UpLink (NUL) and a Supplementary UpLink (SUL).

As an embodiment, the third signaling indicates that the first random access preamble is contention-free.

As an embodiment, the first random access preamble is a feature sequence.

As an embodiment, the first random access preamble is a Gold sequence.

As an embodiment, the first random access preamble is an M sequence.

As an embodiment, the first random access preamble is a Zadoff-Chu (ZC) sequence.

As an embodiment, the first node is configured or indicated that there is no corresponding Random Access Response (RAR) for the first random access preamble.

As an embodiment, the first node is configured or indicated that a random access response window is not opened after the first random access preamble is transmitted.

As an embodiment, the first random access preamble does not belong to a random access procedure.

As an embodiment, the first random access preamble is used for determining a Timing Advance Value for the second cell.

As an embodiment, the first signaling indicates the timing advance value for the second cell.

As an embodiment, the first signaling indicates the timing advance value for at least the second cell.

As an embodiment, the timing advance value is for a plurality of cells, and the plurality of cells comprise the second cell.

As an embodiment, the plurality of cells belong to the same Timing Advance Group (TAG).

As an embodiment, the timing advance value is applied to cells included in the TAG.

As an embodiment, the first signaling implicitly indicates the timing advance value for the second cell.

As an embodiment, the first signaling indicates that the timing advance value for the second cell is the same as a timing advance value for a source cell.

As a sub-embodiment of the above embodiment, the source cell is the first cell.

As a sub-embodiment of the above embodiment, the source cell is a serving cell of the first node.

As an embodiment, the first signaling indicates that the timing advance value for the second cell is the same as timing advance values for cells included in a Secondary Timing Advance Group (STAG).

As an embodiment, the first signaling indicates that the timing advance value for the second cell is the same as timing advance values for cells included in a Primary Timing Advance Group (PTAG).

As an embodiment, the first signaling explicitly indicates the timing advance value for the second cell.

As an embodiment, the first signaling comprises the timing advance value for the second cell.

As an embodiment, the first signaling comprises a Timing Advance (TA) field, and the TA field indicates the timing advance value for the second cell.

As an embodiment, the timing advance value is 0.

As an embodiment, the timing advance value is not 0.

As an embodiment, the first cell and the second cell belong to different TAGs.

As an embodiment, the first cell and the second cell belong to the same TAG.

As an embodiment, the timing advance value for the second cell, that is indicated by the first signaling, is used for maintaining Uplink Time Alignment with the second cell.

As an embodiment, after the timing advance value for the second cell is received and applied, the first node considers to be in Uplink Time Alignment with the second cell.

As an embodiment, second signaling is transmitted on the first cell, and the second signaling indicates that the first signaling is correctly received.

As an embodiment, the second signaling is physical layer signaling.

As an embodiment, the second signaling is Hybrid Automatic Repeat Request (HARQ)-ACKnowledgement (ACK) feedback.

As an embodiment, the second signaling is an ACK.

As an embodiment, the second signaling is feedback for correctly receiving one transport block (TB), and the one transport block comprises the first signaling.

As an embodiment, the second signaling is feedback for correctly receiving one MAC Protocol Data Unit (PDU), the one MAC PDU comprises at least one MAC sub protocol data unit (subPDU), and the at least one MAC subPDU comprises the first signaling.

As an embodiment, after transmission of the second signaling is completed, the first node disconnects from the first cell.

As an embodiment, disconnecting from the first cell comprises: stopping monitoring a PDCCH on the first cell.

As an embodiment, disconnecting from the first cell comprises: stopping transmitting an uplink channel or an uplink signal on the first cell, wherein the uplink channel comprises a PUCCH and a PUSCH, and the uplink signal comprises a Sounding Reference Signal (SRS).

As an embodiment, disconnecting from the first cell comprises: an RRC configuration for the first cell being stopped from being applied.

As an embodiment, the first signaling does not trigger transmission of a random access preamble on the second cell during cell switch.

As an embodiment, the first signaling does not trigger initiating a random access procedure on the second cell during cell switch.

As an embodiment, the first node monitors the PDCCH in the DRX active time on the second cell.

As an embodiment, the PDCCH is monitored on the second cell.

As an embodiment, the PDCCH indicates a new transmission.

As an embodiment, the PDCCH schedules a downlink transmission.

As an embodiment, the PDCCH schedules a Physical Downlink Shared Channel (PDSCH) reception.

As an embodiment, the PDCCH schedules an uplink transmission.

As an embodiment, the PDCCH schedules PUSCH transmission.

As an embodiment, the PDCCH indicates a time-frequency resource occupied by second RRC signaling, and the second RRC signaling indicates that RRC reconfiguration is completed.

As an embodiment, the PDCCH indicates that cell switch is successful.

As an embodiment, when the PDCCH is received, the first node determines that cell switch is successful.

As an embodiment, the PDCCH indicates a time-frequency resource used for a new transmission.

As an embodiment, when a New Data Indication (NDI) included in the PDCCH is toggled compared to an NDI included in DCI signaling that was most recently received by the first node prior to receiving the PDCCH, a new transmission is indicated, wherein a Hybrid Automatic Repeat Request (HARQ) process ID included in the PDCCH is the same as an HARQ process ID included in the DCI signaling that was most recently received prior to receiving the PDCCH.

As a sub-embodiment of the above embodiment, the NDI included in the DCI signaling most recently received prior to receiving the PDCCH is 0, and the NDI included in the PDCCH is 1, indicating that the NDI included in the PDCCH is toggled.

As a sub-embodiment of the above embodiment, the NDI included in the DCI signaling most recently received prior to receiving the PDCCH is 1, and the NDI included in the PDCCH is 0, indicating that the NDI included in the PDCCH is toggled.

As an embodiment, when the PDCCH indicates that a Semi-Persistent Scheduling (SPS) is activated, the PDCCH is used for scheduling a new transmission.

As an embodiment, when the PDCCH indicates that a multicast SPS is activated, the PDCCH is used for scheduling a new transmission.

As an embodiment, when the PDCCH indicates that a configured grant type 2 is activated, the PDCCH is used for scheduling a new transmission.

As an embodiment, when the PDCCH indicates that a configured sidelink grant of the configured grant type 2 is activated, the PDCCH is used for scheduling a new transmission.

As an embodiment, the first transmission for one transport block (TB) is a new transmission.

As an embodiment, a transmission for one transport block (TB) without a previous NDI is a new transmission.

As an embodiment, the second RRC signaling is transmitted on the second cell.

As an embodiment, the second RRC signaling is transmitted on the time-frequency resource indicated by the PDCCH.

As an embodiment, the second RRC signaling is RRCReconfigurationComplete (RRC reconfiguration is completed).

As an embodiment, the second RRC signaling is used for responding to the first RRC signaling.

As an embodiment, the second RRC signaling indicates that cell switch is successful.

As an embodiment, when the second RRC signaling is received, the third node N53 determines that cell switch is successful.

As an embodiment, the PDCCH is a first PDCCH received on the second cell.

As an embodiment, the second RRC signaling is included in a first uplink MAC PDU scheduled by the PDCCH.

As an embodiment, the first transmitter transmits second RRC signaling on the second cell, the second RRC signaling indicating that RRC reconfiguration is completed, wherein the first RRC signaling configures an air interface resource for transmitting the second RRC signaling.

As a sub-embodiment of the above embodiment, the air interface resource occupied by the second RRC signaling is a configured grant (CG).

### Embodiment 6

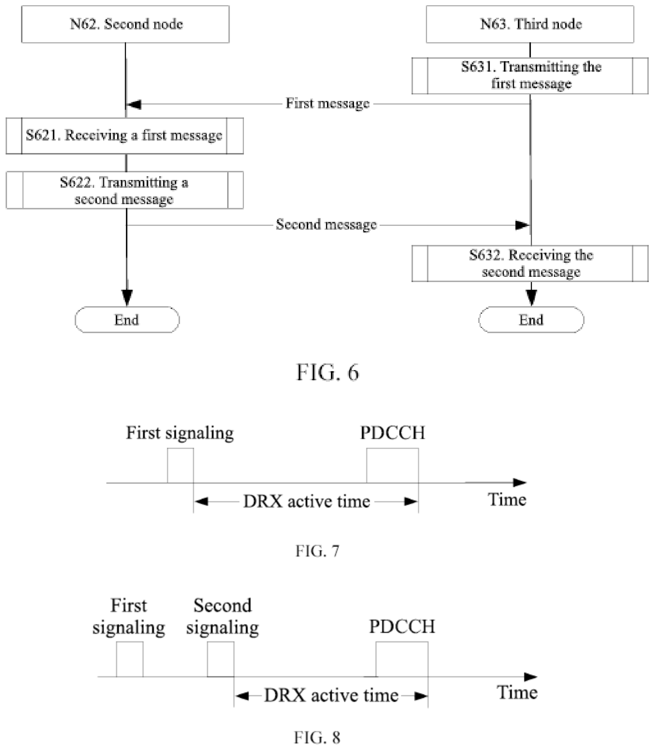

Embodiment 6 illustrates a flowchart of signal transmission in a backhaul network according to an embodiment of the present application, as shown in FIG. 6. In FIG. 6, a second node N62 and a third node N63 communicate through a backhaul network.

For **the second node N62,** a first message is received in step S621, and a second message is transmitted in step S622.

For **the third node N63,** a first message is transmitted in step S631, and a second message is received in step S632.

Embodiment 6 illustrates a scenario in which the second node N62 and the third node N63 are connected via a backhaul network. Embodiment 6 does not exclude a scenario in which the second node N62 and the third node N63 are connected via other interfaces, and the other interfaces include but are not limited to an internal interface.

As an embodiment, the second node N62 is a serving base station of the first cell, and the third node N63 is a serving base station of the second cell.

As an embodiment, the second node N62 is a gNB-DU of a source cell in cell switch, the third node N63 is a gNB-DU of a target cell in the cell switch, the target cell is the second cell, and the source cell comprises the first cell.

As an embodiment, the second node N62 and the third node N63 may be connected directly or interconnected through a gNB-CU.

As an embodiment, the third node N63 transmits a configuration of the second cell to the second node N62, and the second node N62 transmits at least part of the configuration of the second cell to the first node through the first RRC signaling.

As an embodiment, the configuration of the second cell comprises monitoring a USS of the PDCCH.

As an embodiment, the configuration of the second cell comprises monitoring a CSS of the PDCCH.

As an embodiment, the configuration of the second cell comprises the first random access preamble.

As an embodiment, the configuration of the second cell comprises an air interface resource for transmitting the first random access preamble on the second cell.

As an embodiment, third signaling triggers transmission of the first random access preamble on the second cell, and the first random access preamble is used by the third node N63 for determining the timing advance value for the second cell; and the third node N63 transmits a first message to the second node N62, the first message comprises the timing advance value for the second cell, and the second node N62 indicates the timing advance value for the second cell through the first signaling, such that the first node achieves uplink time alignment with the second cell.

As an embodiment, the second node N62 transmits the first signaling to indicate cell switch; and the second node N62 transmits a second message to the third node N63 after transmitting the first signaling.

As an embodiment, the second message indicates that a cell is switched to the second cell.

As an embodiment, the second message indicates that uplink or downlink transmission can be performed through the second cell.

As an embodiment, the second message indicates that the second cell transmits the PDCCH.

As an embodiment, the second message indicates a beam selected for the second cell.

As an embodiment, the second message indicates transmitting the PDCCH through the beam selected for the second cell.

As an embodiment, the second message indicates receiving the second RRC signaling through the beam selected for the second cell.

As an embodiment, both the first message and the second message are backhaul network interface messages, wherein the second node N62 and the third node N63 are connected through a backhaul network.

As an embodiment, both the first message and the second message are internal messages, wherein the second node N62 and the third node N63 are connected through an internal interface.

### Embodiment 7

Embodiment 7 illustrates a schematic diagram of a DRX active time according to an embodiment of the present application, as shown in FIG. 7.

As an embodiment, the DRX active time starts when the first signaling is received.

As an embodiment, the first signaling being received comprises: an ending moment of a time domain resource occupied by the first signaling.

As an embodiment, the first signaling being received comprises: an ending moment of a symbol where a time domain resource occupied by the first signaling is located.

As an embodiment, the first signaling being received comprises: an ending moment of a slot where a time domain resource occupied by the first signaling is located.

As an embodiment, the first signaling being received comprises: an ending moment of a subframe where a time domain resource occupied by the first signaling is located.

As an embodiment, the DRX active time starts from the first symbol after the first signaling is received.

As an embodiment, the DRX active time starts from the first slot after the first signaling is received.

As an embodiment, the DRX active time starts from the first subframe after the first signaling is received.

As an embodiment, the DRX active time starts from the first downlink symbol after the first signaling is received.

As an embodiment, the DRX active time ends when the PDCCH is received.

As an embodiment, the DRX active time is the time from the moment when the first signaling is received to the moment when the PDCCH is received.

As an embodiment, the DRX active time is the time from the first downlink symbol after the first signaling is received to the moment when the PDCCH is received.

Embodiment 7 illustrates that the DRX active time is the time from the moment when the first signaling is received to the moment when the PDCCH is received.

### Embodiment 8

Embodiment 8 illustrates a schematic diagram of a DRX active time according to an embodiment of the present application, as shown in FIG. 8.

As an embodiment, the DRX active time starts when transmission of the second signaling is completed.

As an embodiment, the DRX active time starts from the first symbol after the transmission of the second signaling is completed.

As an embodiment, the DRX active time starts from the first slot after the transmission of the second signaling is completed.

As an embodiment, the DRX active time starts from the first subframe after the transmission of the second signaling is completed.

As an embodiment, the DRX active time starts from the first downlink symbol after the transmission of the second signaling is completed.

As an embodiment, the DRX active time is the time from the moment when the transmission of the second signaling is completed to the moment when the PDCCH is received.

As an embodiment, the DRX active time is the time starts from the first downlink symbol after the transmission of the second signaling is completed to the moment when the PDCCH is received.

As an embodiment, transmitting time of the second signaling depends on the first signaling.

As an embodiment, the transmitting time of the second signaling is indicated by a PDCCH that schedules the first signaling.

As an embodiment, an interval between the transmitting time of the second signaling and the receiving time of the first signaling is indicated by a PDCCH that schedules the first signaling.

Embodiment 8 illustrates that the DRX active time is the time from the moment when the transmission of the second signaling is completed to the moment when the PDCCH is received.

### Embodiment 9

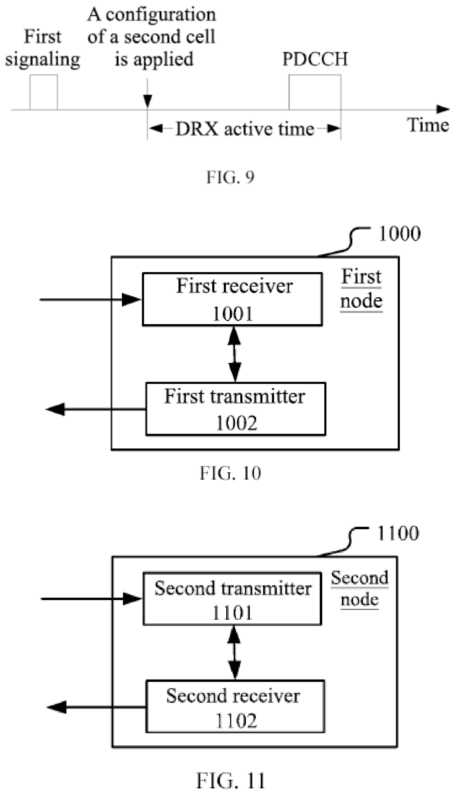

Embodiment 9 illustrates a schematic diagram of a DRX active time according to an embodiment of the present application, as shown in FIG. 9.

As an embodiment, the first signaling indicates that the configuration of the second cell is applied.

As an embodiment, the first signaling implicitly indicates that the configuration of the second cell is applied.

As an embodiment, the configuration of the second cell being applied comprises: the configuration of the second cell replacing the current configuration of the first node.

As an embodiment, the configuration of the second cell being applied comprises: performing RRC reconfiguration using the configuration of the second cell.

As an embodiment, the configuration of the second cell being applied comprises: performing RRC reconfiguration using the configuration of the second cell, and not performing Layer 2 (L2) reset.

As an embodiment, the time when the configuration of the second cell is applied is autonomously determined by UE.

As an embodiment, the time when the configuration of the second cell is applied is autonomously determined according to the capability of UE.

As an embodiment, a time interval between the moment when the configuration of the second cell is applied and the moment when the first signaling is received is not greater than Q1 symbols, wherein Q1 is a non-negative integer.

As an embodiment, the DRX active time starts when the configuration of the second cell is applied.

As an embodiment, the DRX active time is the time from the moment when the configuration of the second cell is applied to the moment when the PDCCH is received.

Embodiment 9 illustrates that the DRX active time is the time from the moment when the configuration of the second cell is applied to the moment when the PDCCH is received.

### Embodiment 10

Embodiment 11 illustrates a structure block diagram of a processing apparatus in a first node according to an embodiment of the present application; as shown in FIG. 10. In FIG. 10, a first node processing apparatus 1000 comprises a first receiver 1001 and a first transmitter 1002; and the first node 1000 is UE.

In Embodiment 10, the first receiver 1001 receives first RRC signaling, the first RRC signaling indicating a DRX active time, and the DRX active time being applied to at least a second cell; receives first signaling on a first cell, the first signaling indicating switching to the second cell; and monitors a PDCCH within the DRX active time on the second cell, wherein the DRX active time depends on the first signaling; and the first signaling is lower-layer signaling.

As an embodiment, the DRX active time depending on the first signaling comprises: the DRX active time starting when the first signaling is received.

As an embodiment, the first transmitter 1002 transmits second signaling on the first cell, the second signaling indicating that the first signaling is correctly received, wherein the DRX active time depending on the first signaling comprises: the DRX active time starting when the transmission of the second signaling is completed.

As an embodiment, the DRX active time depending on the first signaling comprises: the DRX active time starting when a configuration of the second cell is applied, wherein the first signaling indicates that the configuration of the second cell is applied.

As an embodiment, the first transmitter 1002 transmits second RRC signaling on the second cell, the second RRC signaling indicating that RRC reconfiguration is completed, wherein the PDCCH is monitored, and the PDCCH indicates a time-frequency resource occupied by the second RRC signaling.

As an embodiment, the first signaling indicates a timing advance value for the second cell; and the first signaling does not trigger transmission of a random access preamble on the second cell.

As an embodiment, the first signaling indicates a timing advance value for the second cell; the first receiver 1001 receives third signaling before receiving the first signaling; and the first transmitter 1002, in response to receiving the third signaling, transmits a first random access preamble on the second cell, wherein the first random access preamble is used for determining the timing advance value for the second cell.

As an embodiment, the first receiver 1001 comprises the receiving device 454 (including the antenna 452), the receiving processor 456, the multi-antenna receiving processor 458, and the controller/processor 459 in FIG. 4 of the present application.

As an embodiment, the first receiver 1001 comprises at least one of the receiving device 454 (including the antenna 452), the receiving processor 456, the multi-antenna receiving processor 458, or the controller/processor 459 in FIG. 4 of the present application.

As an embodiment, the first transmitter 1002 comprises the transmitting device 454 (including the antenna 452), the transmitting processor 468, the multi-antenna transmitting processor 457, and the controller/processor 459 in FIG. 4 of the present application.

As an embodiment, the first transmitter 1002 comprises at least one of the transmitting device 454 (including the antenna 452), the transmitting processor 468, the multi-antenna transmitting processor 457, or the controller/processor 459 in FIG. 4 of the present application.

### Embodiment 11

Embodiment 11 illustrates a structure block diagram of a processing apparatus in a second node according to an embodiment of the present application, as shown in FIG. 11. In FIG. 11, a second node processing apparatus 1100 comprises a second receiver 1101 and a second transmitter 1102; and the second node 1100 is a base station or gNB-DU.

In Embodiment 11, the second transmitter transmits first RRC signaling, the first RRC signaling indicating a DRX active time, and the DRX active time being applied to at least a second cell; and transmits first signaling on a first cell, the first signaling indicating switching to the second cell, wherein a PDCCH is monitored within the DRX active time on the second cell; the DRX active time depends on the first signaling; and the first signaling is lower-layer signaling.

As an embodiment, the DRX active time depending on the first signaling comprises: the DRX active time starting when the first signaling is received.

As an embodiment, the second receiver 1101 receives second signaling on the first cell, the second signaling indicating that the first signaling is correctly received, wherein the DRX active time depending on the first signaling comprises: the DRX active time starting when the transmission of the second signaling is completed.

As an embodiment, the DRX active time depending on the first signaling comprises: the DRX active time starting when a configuration of the second cell is applied, wherein the first signaling indicates that the configuration of the second cell is applied.

As an embodiment, the first signaling indicates a timing advance value for the second cell; and the first signaling does not trigger transmission of a random access preamble on the second cell.

As an embodiment, the first signaling indicates a timing advance value for the second cell; and the second transmitter 1102 transmits third signaling prior to transmitting the first signaling, wherein the third signaling is used for triggering transmission of a first random access preamble on the second cell; and the first random access preamble is used for determining the timing advance value for the second cell.

As an embodiment, the first signaling indicates a timing advance value for the second cell; and the second receiver 1101 receives a first message, the first message indicating the timing advance value for the second cell.

As an embodiment, the second transmitter 1102 transmits a second message, the second message indicating switching to the second cell.

As an embodiment, the second receiver 1101 comprises the receiving device 418 (including the antenna 420), the receiving processor 470, the multi-antenna receiving processor 472, and the controller/processor 475 in FIG. 4 of the present application.

As an embodiment, the second receiver 1101 comprises at least one of the receiving device 418 (including the antenna 420), the receiving processor 470, the multi-antenna receiving processor 472, and the controller/processor 475 in FIG. 4 of the present application.

As an embodiment, the second transmitter 1102 comprises the transmitting device 418 (including the antenna 420), the transmitting processor 416, the multi-antenna transmitting processor 471, and the controller/processor 475 in FIG. 4 of the present application.

As an embodiment, the second transmitter 1102 comprises at least one of the transmitting device 418 (including the antenna 420), the transmitting processor 416, the multi-antenna transmitting processor 471, or the controller/processor 475 in FIG. 4 of the present application.

### Embodiment 12

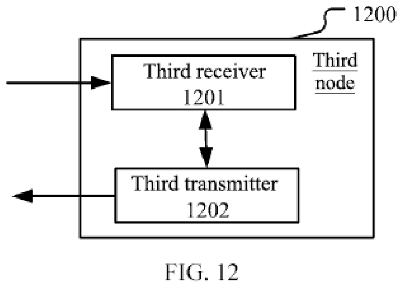

Embodiment 12 illustrates a structure block diagram of a processing apparatus in a third node according to an embodiment of the present application, as shown in FIG. 12. In FIG. 12, a third node processing apparatus 1200 comprises a third receiver 1201 and a third transmitter 1202; and the third node 1200 is a base station or gNB-DU.

In Embodiment 12, the third receiver 1201 receives a first random access preamble on a second cell, wherein the first random access preamble is used for determining a timing advance value for the second cell; wherein first RRC signaling is received, the first RRC signaling indicates a DRX active time, and the DRX active time is applied to at least the second cell; first signaling is received on a first cell, and the first signaling indicates switching to the second cell; a PDCCH is monitored within the DRX active time on the second cell; the DRX active time depends on the first signaling; the first signaling is lower-layer signaling; and third signaling is received before the first signaling is received, and the third signaling is used for triggering transmission of the first random access preamble.

As an embodiment, the DRX active time depending on the first signaling comprises: the DRX active time starting when the first signaling is received.

As an embodiment, the DRX active time depending on the first signaling comprises: the DRX active time starting when the transmission of the second signaling is completed, wherein the second signaling is received on the first cell, and the second signaling indicates that the first signaling is correctly received.

As an embodiment, the DRX active time depending on the first signaling comprises: the DRX active time starting when a configuration of the second cell is applied, wherein the first signaling indicates that the configuration of the second cell is applied.

As an embodiment, the third transmitter 1202 transmits the PDCCH on the second cell; and the third receiver receives second RRC signaling on the second cell, the second RRC signaling indicating that RRC reconfiguration is completed, wherein the PDCCH indicates a time-frequency resource occupied by the second RRC signaling.

As an embodiment, the first signaling indicates the timing advance value for the second cell; and the first signaling does not trigger transmission of a random access preamble on the second cell.

As an embodiment, the first signaling indicates the timing advance value for the second cell; and the third transmitter 1202 transmits a first message, the first message indicating the timing advance value for the second cell.

As an embodiment, the third receiver 1201 receives a second message, the second message indicating switching to the second cell.

As an embodiment, the third receiver 1201 comprises the receiving device 418 (including the antenna 420), the receiving processor 470, the multi-antenna receiving processor 472, and the controller/processor 475 in FIG. 4 of the present application.

As an embodiment, the third receiver 1201 comprises at least one of the receiving device 418 (including the antenna 420), the receiving processor 470, the multi-antenna receiving processor 472, and the controller/processor 475 in FIG. 4 of the present application.

As an embodiment, the third transmitter 1202 comprises the transmitting device 418 (including the antenna 420), the transmitting processor 416, the multi-antenna transmitting processor 471, and the controller/processor 475 in FIG. 4 of the present application.

As an embodiment, the third transmitter 1202 comprises at least one of the transmitting device 418 (including the antenna 420), the transmitting processor 416, the multi-antenna transmitting processor 471, or the controller/processor 475 in FIG. 4 of the present application.

Those of ordinary skill in the art can understand that all or some of the steps in the above method can be completed by instructing relevant hardware through a program, and the program can be stored in a computer-readable storage medium, such as a read-only memory, a hard disk, or an optical disk. Optionally, all or some of the steps in the above embodiments can also be implemented using one or more integrated circuits. Accordingly, each module unit in the above embodiments can be implemented in the form of hardware or in the form of a software function module. The present application is not limited to any specific form of software and hardware combination. The first-type communication node or UE or terminal in the present application includes, but is not limited to, mobile phones, tablet computers, notebook computers, network cards, low-power-consumption devices, enhanced Machine Type Communication (eMTC) devices, NB-IoT devices, vehicle-mounted communication devices, aircrafts, airplanes, drones, remote-controlled airplanes and other wireless communication devices. The second-type communication node or base station or network-side device in the present application includes, but is not limited to, macro cell base stations, micro cell base stations, Femtocells, relay base stations, eNBs, gNBs, Transmission and Reception Points (TRPs), relay satellites, satellite base stations, aerial base stations and other wireless communication devices.

The above embodiments are only preferred embodiments of the present application and are not used for limiting the scope of protection of the present application. Any modifications, equivalent substitutions, improvements and the like made within the spirit and principles of the present invention shall be comprised within the scope of protection of the present application.

## Claims

1. A first node used for wireless communication, comprising:
a first receiver, receiving first RRC signaling, the first RRC signaling indicating a DRX active time, and the DRX active time being applied to at least a second cell; receiving first signaling on a first cell, the first signaling indicating switching to the second cell; and monitoring a PDCCH within the DRX active time on the second cell,
wherein the DRX active time depends on the first signaling; and the first signaling is lower-layer signaling.

2. The first node according to claim 1, wherein the DRX active time depending on the first signaling comprises: the DRX active time starting when the first signaling is received.

3. The first node according to claim 1, comprising:
a first transmitter, transmitting second signaling on the first cell, the second signaling indicating that the first signaling is correctly received,
wherein the DRX active time depending on the first signaling comprises: the DRX active time starting when the transmission of the second signaling is completed.

4. The first node according to claim 1, wherein the DRX active time depending on the first signaling comprises: the DRX active time starting when a configuration of the second cell is applied,
wherein the first signaling indicates that the configuration of the second cell is applied.

5. The first node according to any one of claims 1 to 4, comprising:
a first transmitter, transmitting second RRC signaling on the second cell, the second RRC signaling indicating that RRC reconfiguration is completed,
wherein the PDCCH is monitored, and the PDCCH indicates a time-frequency resource occupied by the second RRC signaling.

6. The first node according to any one of claims 1 to 5, wherein the first signaling indicates a timing advance value for the second cell; and the first signaling does not trigger transmission of a random access preamble on the second cell.

7. The first node according to claim 6, comprising:
the first receiver, receiving third signaling prior to receiving the first signaling;
and a first transmitter, in response to receiving the third signaling, transmitting a first random access preamble on the second cell,
wherein the first random access preamble is used for determining the timing advance value for the second cell.

8. A second node used for wireless communication, comprising:
a second transmitter, transmitting first RRC signaling, the first RRC signaling indicating a DRX active time, and the DRX active time being applied to at least a second cell; and transmitting first signaling on a first cell, the first signaling indicating switching to the second cell;
wherein a PDCCH is monitored within the DRX active time on the second cell; the DRX active time depends on the first signaling; and the first signaling is lower-layer signaling.

9. The second node according to claim 8, wherein the DRX active time depending on the first signaling comprises: the DRX active time starting when the first signaling is received.

10. The second node according to claim 8, comprising:
a second receiver, receiving second signaling on the first cell, the second signaling indicating that the first signaling is correctly received;
wherein the DRX active time depending on the first signaling comprises: the DRX active time starting when transmission of the second signaling is completed.

11. The second node according to claim 8, wherein the DRX active time depending on the first signaling comprises: the DRX active time starting when a configuration of the second cell is applied,
wherein the first signaling indicates that the configuration of the second cell is applied.

12. The second node according to any one of claims 8 to 11, comprising:
a third transmitter, transmitting the PDCCH on the second cell;
and a third receiver, receiving second RRC signaling on the second cell, the second RRC signaling indicating that RRC reconfiguration is completed,
wherein the PDCCH indicates a time-frequency resource occupied by the second RRC signaling.

13. The second node according to any one of claims 8 to 12, wherein the first signaling indicates a timing advance value for the second cell; and the first signaling does not trigger transmission of a random access preamble on the second cell.

14. The second node according to claim 13, comprising:
the second transmitter, transmitting third signaling prior to transmitting the first signaling,
wherein the third signaling is used for triggering transmission of a first random access preamble on the second cell; and the first random access preamble is used for determining the timing advance value for the second cell.

15. A method in a first node used for wireless communication, comprising:
receiving first RRC signaling, the first RRC signaling indicating a DRX active time, and the DRX active time being applied to at least a second cell;
receiving first signaling on a first cell, the first signaling indicating switching to the second cell; and monitoring a PDCCH within the DRX active time on the second cell;
wherein the DRX active time depends on the first signaling; and the first signaling is lower-layer signaling.

16. The method in a first node according to claim 15, wherein the DRX active time depending on the first signaling comprises: the DRX active time starting when the first signaling is received.

17. The method in a first node according to claim 15, comprising:
transmitting second signaling on the first cell, the second signaling indicating that the first signaling is correctly received,
wherein the DRX active time depending on the first signaling comprises: the DRX active time starting when the transmission of the second signaling is completed.

18. The method in a first node according to claim 15, wherein the DRX active time depending on the first signaling comprises: the DRX active time starting when a configuration of the second cell is applied,
wherein the first signaling indicates that the configuration of the second cell is applied.

19. The method in a first node according to any one of claims 15 to 18, comprising:
transmitting second RRC signaling on the second cell, the second RRC signaling indicating that RRC reconfiguration is completed,
wherein the PDCCH is monitored, and the PDCCH indicates a time-frequency resource occupied by the second RRC signaling.

20. The method in a first node according to any one of claims 15 to 19, wherein the first signaling indicates a timing advance value for the second cell; and the first signaling does not trigger transmission of a random access preamble on the second cell.

21. The method in a first node according to claim 20, comprising:
receiving third signaling prior to receiving the first signaling;
and in response to receiving the third signaling, transmitting a first random access preamble on the second cell,
wherein the first random access preamble is used for determining the timing advance value for the second cell.

22. A method in a second node used for wireless communication, comprising:
transmitting first RRC signaling, the first RRC signaling indicating a DRX active time, and the DRX active time being applied to at least a second cell;
and transmitting first signaling on a first cell, the first signaling indicating switching to the second cell,
wherein a PDCCH is monitored within the DRX active time on the second cell; the DRX active time depends on the first signaling; and the first signaling is lower-layer signaling.

23. The method in a second node according to claim 22, wherein the DRX active time depending on the first signaling comprises: the DRX active time starting when the first signaling is received.

24. The method in a second node according to claim 22, comprising:
receiving second signaling on the first cell, the second signaling indicating that the first signaling is correctly received,
wherein the DRX active time depending on the first signaling comprises: the DRX active time starting when transmission of the second signaling is completed.

25. The method in a second node according to claim 22, wherein the DRX active time depending on the first signaling comprises: the DRX active time starting when a configuration of the second cell is applied,
wherein the first signaling indicates that the configuration of the second cell is applied.

26. The method in a second node according to any one of claims 22 to 25, comprising:
transmitting the PDCCH on the second cell;
and receiving second RRC signaling on the second cell, the second RRC signaling indicating that RRC reconfiguration is completed,
wherein the PDCCH indicates a time-frequency resource occupied by the second RRC signaling.

27. The method in a second node according to any one of claims 22 to 26, wherein the first signaling indicates a timing advance value for the second cell; and the first signaling does not trigger transmission of a random access preamble on the second cell.

28. The method in a second node according to claim 27, comprising:
transmitting third signaling prior to transmitting the first signaling,
wherein the third signaling is used for triggering transmission of a first random access preamble on the second cell; and the first random access preamble is used for determining the timing advance value for the second cell.
